# EUROPÄISCHE PATENTSCHRIFT

(11) **EP 3 688 231 B1**
(45) Veröffentlichungstag und Bekanntmachung des Hinweises auf die Patenterteilung: **18.11.2020**
(21) Anmeldenummer: 18740194.8
(22) Anmeldetag: 11.07.2018
(51) Int. Cl.: E02B 9/00, E02B 9/02, F16K 3/02, F16K 31/04

(54) **WASSERKRAFTANLAGE MIT EINEM ELEKTRISCHEN ANTRIEB ZUR BETÄTIGUNG EINES WASSERSCHÜTZES**
HYDROELECTRIC POWER PLANT HAVING AN ELECTRIC DRIVE FOR ACTUATING A SLUICE GATE
CENTRALE HYDROÉLECTRIQUE DOTÉE D'UNE COMMANDE ÉLECTRIQUE POUR L'ACTIONNEMENT D'UNE VANNE

(30) Priorität: 28.09.2017 DE 102017122541
(43) Veröffentlichungstag der Anmeldung: 05.08.2020
(73) Patentinhaber: Voith Patent GmbH, 89522 Heidenheim (DE)
(72) Erfinder: RICHTER, Peter, 89520 Heidenheim (DE); LECHNER, Andreas, 89518 Heidenheim (DE)
(86) Internationale Anmeldenummer: PCT/EP2018/068757
(87) Internationale Veröffentlichungsnummer: WO 2019/063156

(56) Entgegenhaltungen:
- DE-U1-202013 011 141
- GB-A- 2 442 597
- JP-A- S58 127 814

## Beschreibung

Die vorliegende Erfindung betrifft eine Wasserkraftanlage mit einem elektrischen Antrieb zur Betätigung eines Wasserschützes.

Viele Wasserkraftanlagen besitzen aus Sicherheitsgründen ein Wasserschütz mit dessen Hilfe im Schadensfall die Anlage sicher außer Betrieb gesetzt werden kann. Herkömmlicherweise wird ein solches Wasserschütz mit Hilfe eines hydraulischen Servomotors und einem Hydraulikaggregat betätigt. Hierfür wird eine große Menge Hydrauliköl benötigt, das ein Risiko für die Umwelt darstellt. Aus dem Stand der Technik sind ferner Antriebe für Wasserschütze einer Wasserkraftanlage bekannt geworden, die elektrisch betätigt werden. So offenbart die DE 10 2012 224 188 A1 einen elektrischen Antrieb zu Betätigung des Wasserschützes einer Wasserkraftanlage, welcher eine elektrische Maschine und eine Lüfterbremse umfasst. Der Antrieb umfasst ferner zwei Stromstränge: Einen ersten Stromstrang für den Normalbetrieb und einen zweiten Stromstrang für den Notbetrieb. Der zweite Stromstrang ist dafür ausgebildet die elektrische Maschine im generatorischen Inselbetrieb selbsttätig zu betreiben. Der Antrieb ist auch für den Betrieb bei einem Stromausfall geeignet, ohne dass eine Notstromversorgung für den Betrieb benötigt wird.

DE202013011141 U1 offenbart eine Wasserkraftanlage mit den Merkmalen des Oberbegriffs des Anspruchs 1.

Der Erfinder hat sich die Aufgabe gestellt, einen alternativen elektrischen Antrieb zum Betätigen des Wasserschützes einer Wasserkraftanlage anzugeben, welcher einfacher aufgebaut ist und ein Schließen des Wasserschützes auch im Falle eines Stromausfalls sicher gewährleistet, ohne dass hierfür eine Notstromversorgung oder ähnliches vorgesehen werden muss.

Der Erfinder hat erkannt, dass die gestellte Aufgabe durch eine Wasserkraftanlage mit den Merkmalen des Anspruchs 1 gelöst werden kann. Vorteilhafte Ausführungsformen ergeben sich aus den von Anspruch 1 abhängigen Unteransprüchen.

Die erfindungsgemäße Lösung wird nachfolgend anhand von Figuren erläutert. Darin ist im Einzelnen folgendes dargestellt:
- Figur 1: Wasserkraftanlage;
- Figur 2: Wasserschütz;
- Figur 3: Erfindungsgemäßer Antrieb zum Betätigen eines Wasserschützes.

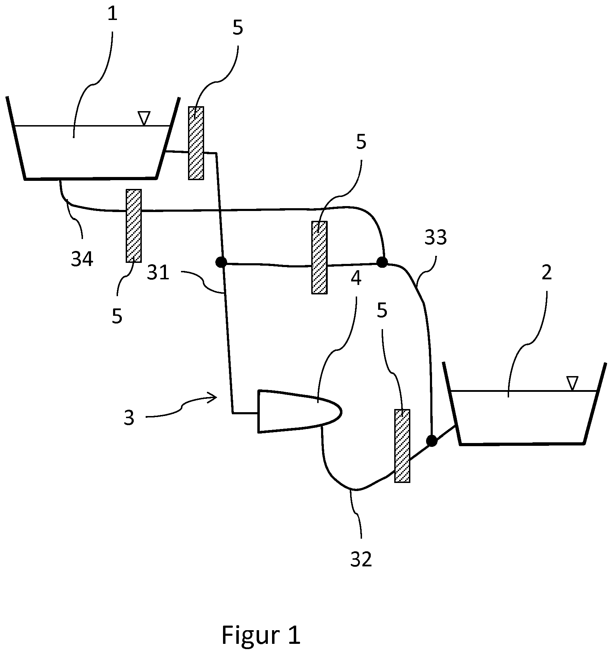

Figur 1 zeigt den schematischen Aufbau einer Wasserkraftanlage. Die Wasserkraftanlage umfasst ein Oberwasserbecken, welches mit 1 bezeichnet ist, und ein Unterwasserbecken, welches mit 2 bezeichnet ist, wobei der Wasserspiegel im Oberwasserbecken 1 über dem Wasserspiegel des Unterwasserbeckens 2 liegt. Bei den Becken 1 und 2 kann es sich auch um natürliche Gewässer wie beispielsweise Seen, Flüsse oder Meeresarme handeln. Die Wasserkraftanlage umfasst ferner ein Wasserwegsystem, welches mit 3 bezeichnet ist und das Oberwasserbecken 1 mit dem Unterwasserbecken 2 verbindet. In wenigsten einem Teilwasserweg des Wasserwegsystems 3 ist eine hydraulische Maschine angeordnet, welche mit 4 bezeichnet ist. Der Teilwasserweg oberhalb der hydraulischen Maschine 4 - die Druckrohrleitung - ist mit 31 bezeichnet, und der Teilwasserweg unterhalb der hydraulischen Maschine 4 - das Saugrohr - ist mit 32 bezeichnet. Bei der hydraulischen Maschine 4 kann es sich um eine Turbine, eine Pumpe oder um eine Pumpturbine handeln. Im Einlaufbereich der Druckrohrleitung 31 ist ein Wasserschütz angeordnet, welcher mit 5 bezeichnet ist. In der Regel wird ein in der Druckrohrleitung 31 angeordneter Wasserschütz 5 als Sicherheitseinrichtung zum Stilllegen der Wasserkraftanlage verwendet. Ein weiterer Wasserschütz ist in der Saugrohrleitung 32 angeordnet, welcher ebenfalls mit 5 bezeichnet ist. Ein Wasserschütz 5 in der Saugrohrleitung 32 wird in der Regel dazu verwendet, die hydraulische Maschine 4 komplett trocken zu legen, was für Wartungsarbeiten notwendig ist. In der Regel wird jedoch auch der Wasserschütz 5 in der Saugrohrleitung 32 im Fehlerfall geschlossen, um ein Rückfluten des Wassers aus dem Unterwasserbecken 2 in das Maschinenhaus der Wasserkraftanlagen zu verhindern, was insbesondere bei Kraftwerken wichtig ist, welche zur Vermeidung von Kavitation tief in den Untergrund eingesenkt sind. Es gibt auch Wasserkraftanlagen, die lediglich über einen Wasserschütz 5 in der Saugrohrleitung 32 verfügen, welcher daher allein dazu dient die Wasserkraftanlage im Fehlerfall stillzulegen. Eine erfindungsgemäße Wasserkraftanlage kann über einen Wasserschütz 5 in der Druckrohrleitung 31, in der Saugrohrleitung 32 oder in beiden Leitungen verfügen.

Die bisher beschriebenen Wasserschütze 5, die in der Druckrohrleitung 31 und/oder in der Saugrohrleitung 32 angeordnet sind, befinden sich im Normalbetriebszustand eines erfindungsgemäßen Wasserkraftwerks in der Geöffnet-Position. Bei bestimmten Wasserkraftwerken gibt es jedoch noch weitere zusätzliche Wasserschütze 5, die nur in besonderen Betriebsweisen in die Geöffnet-Position gefahren werden. Manche Kraftwerke besitzen einen weiteren Teilwasserweg, welcher das Oberwasserbecken 1 direkt mit dem Unterwasserbecken 2 verbindet. D.h. in diesem Teilwasserweg fließt das Wasser nicht durch die hydraulische Maschine 4 sondern an dieser vorbei. Ein solcher Teilwasserweg ist in Figur 1 dargestellt und verbindet die Druckrohrleitung 31 mit dem Saugrohr 32 und ist mit 33 bezeichnet. Dieser Bypass 33 kann genauso gut direkt in das Unterwasserbecken 2 münden. Im Bypass 33 ist ein Wasserschütz 5 angeordnet, der im Normalbetrieb geschlossen ist. In vielen Fällen ist dieser Wasserschütz 5 permanent oder zeitweise z.B. nur bei Hochwasser überströmt bzw. unterströmt. Ein solcher Wasserschütz 5 wird auch als Überlaufschütz ("Spillway") bezeichnet. Gelegentlich wird ein solcher Überlaufschütz 5 auch in die Geöffnet-Position gefahren, z.B. wenn die hydraulische Maschine 4 gewartet wird. Figur 1 zeigt noch einen weiteren Teilwasserweg, welcher mit 34 bezeichnet ist und das Oberwasserbecken 1 mit dem Bypass 33 verbindet. Es handelt sich um einen sogenannten Grundablass, welcher meist im Stauwerk des Oberwasserbeckens angeordnet ist und mit dessen Hilfe das Wasser des Oberwasserbeckens 1 in der Nähe des Grundes desselben abgelassen werden kann. Auch im Grundablass ist ein Wasserschütz 5 angeordnet, der ebenfalls nur in bestimmten Situationen geöffnet wird, z.B. zum Entfernen von Geschiebe aus dem Oberwasserbecken 1. Auch die in diesem Abschnitt beschriebenen zusätzlichen Wasserschütze 5 müssen in der Regel über eine Notschlussfunktion verfügen.

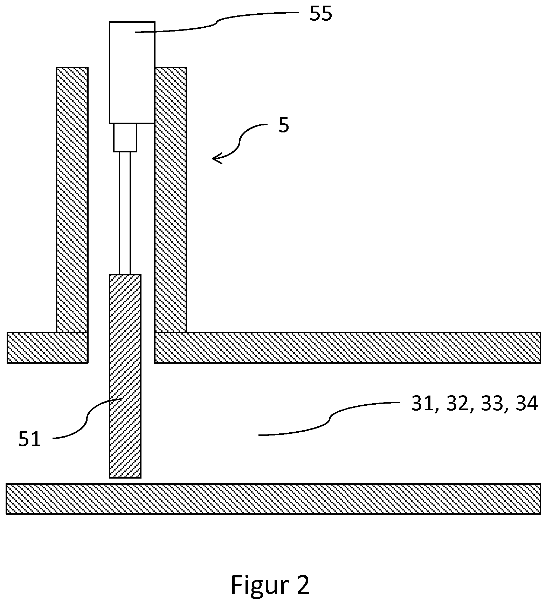

Figur 2 zeigt in stark schematischer Darstellung einen erfindungsgemäßen Wasserschütz 5. Der Wasserschütz 5 befindet sich in einem Teilwasserweg, der mit 31, 32, 33, 34 bezeichnet ist. Der Wasserschütz 5 umfasst eine Schütztafel, welche mit 51 bezeichnet ist, und einen Antrieb, welcher mit 55 bezeichnet ist. Die Schütztafel 51 ist in vertikaler Richtung bewegbar zwischen einer ersten Position, bei der der Teilwasserweg geschlossen ist, und einer zweiten Position, bei der der Teilwasserweg geöffnet ist. In Figur 2 befindet sich die Schütztafel 51 in der ersten Position. Zur Gewährleistung dieser Funktionalität verfügt der Teilwasserweg über geeignete Führungsmittel, die in Figur 2 im Einzelnen nicht dargestellt sind. Der Antrieb 55 ist in vertikaler Richtung oberhalb der Schütztafel 51 so angeordnet, dass er die Schütztafel 51 in vertikaler Richtung zwischen den genannten Positionen bewegen kann. Dazu verfügt der Wasserweg über bauliche Einrichtungen, an denen das Gehäuse des Antriebs 55 befestigt ist. Der Antrieb 55 ist mit der Schütztafel 51 verbunden. Im Prinzip kann der Antrieb 55 auch anders als in Figur 2 dargestellt angeordnet und mit der Schütztafel 51 verbunden sein. So könnte der Antrieb 55 beispielsweise horizontal ausgerichtet sein und über einen umlenkenden Seilzug mit der Schütztafel 51 verbunden sein.

Es ist anzumerken, dass es auch andere mögliche Ausführungsformen für Wasserschütze gibt, die mit dem erfindungsgemäßen Gedanken kompatibel sind, beispielsweise sogenannte Radial-Schütze, bei denen die Schütztafel nicht planar sondern gebogen ausgeführt und drehbar um eine Achse gelagert ist. Solche Redial-Schütze werden oftmals für Spillways verwendet. Der Antrieb 55 greift dann nicht direkt an die Schütztafel an, sondern an mit der Schütztafel verbundene Schwenkarme. Außerdem gibt es noch Ausführungsformen, bei denen die Schütztafel zwar planar ausgeführt ist, diese jedoch nicht in rein vertikaler Richtung bewegbar ist, sondern in schräger Richtung geöffnet und geschlossen wird. In jedem Fall haben die mit dem erfindungsgemäßen Gedanken kompatiblen Ausführungsformen gemeinsam, dass die Schütztafel 51 so ausgeführt ist, dass sie sich zwischen einer ersten Position, bei der der Teilwasserweg geschlossen ist, und einer zweiten Position, bei der der Teilwasserweg geöffnet ist, bewegen kann, und dass der Wasserschütz 5 so ausgeführt ist, dass er durch das Wirken der Gewichtskraft allein geschlossen werden kann.

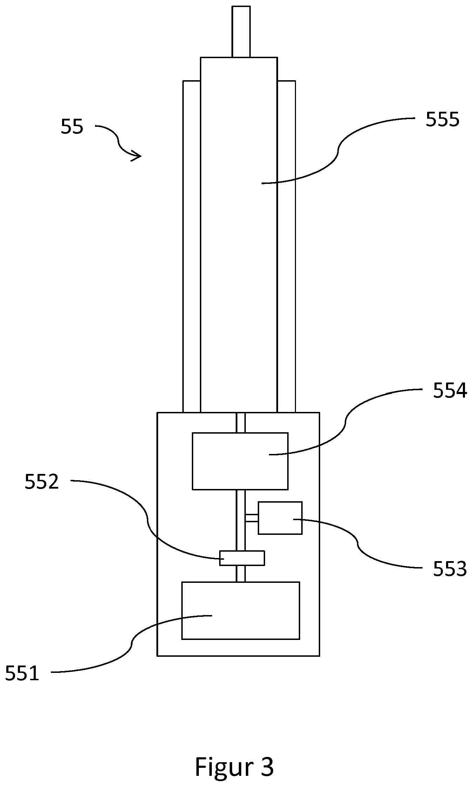

Figur 3 zeigt stark schematisch einen erfindungsgemäßen Antrieb 55. Der Antrieb 55 umfasst einen elektrischen Motor, welcher mit 551 bezeichnet ist, eine mechanische Bremse mit einstellbarer Bremskraft, welche mit 552 bezeichnet ist, eine Arretierungseinheit, welche mit 553 bezeichnet ist, ein Getriebe, welches mit 554 bezeichnet ist, und einen Spindelgewindetrieb ohne Selbsthemmung, welcher mit 555 bezeichnet ist. Der Motor 551 ist so mit dem Getriebe 554 und dem Spindelgewindetrieb 555 verbunden, dass durch ein Drehen des Motors 551 die Spindel des Spindelgewindetriebs 555 ein- und ausgefahren werden kann. In der Ausführungsform des Wasserschützes 5 gemäß Figur 2 ist das freie Ende der Spindel des Spindelgewindetriebs 555 mit der Schütztafel 51 verbunden. Die genannten Komponenten sind in jedem Fall so ausgelegt, dass die notwendige Kraft durch den Antrieb aufgebracht werden kann, um den Wasserschütz 5 in die Geöffnet-Position zu bringen. Dabei wird das Getriebe 554 so wirken, dass die vom Motor 551 gelieferte Drehbewegung - relativ hohe Drehzahl bei relativ geringem Drehmoment - in eine Drehbewegung mit geringerer Drehzahl und höherem Drehmoment transformiert und auf den Spindelgewindetrieb 555 übertragen wird. Da der Spindelgewindetrieb 555 keine Selbsthemmung besitzt, genügt es zum Schließen des Wasserschützes 5 den Motor 551 strom- bzw. spannungslos zu schalten, da der Wasserschütz 5 so ausgeführt ist, dass er durch die Gewichtskraft allein in die Geschlossen-Position gebracht werden kann. Dabei dient die mechanische Bremse 552 mit einstellbarer Bremskraft dazu die Schließzeit des Wasserschützes 5 einzustellen - je höher die Bremskraft desto länger ist die Schließzeit. Die Bremse 552 ist so angeordnet, dass sie die Drehbewegung des Antriebsstrangs innerhalb des Antriebs 55 hemmen kann. Um diesen Zweck zu erfüllen, kann sich die Bremse 552 an verschiedenen Stellen befinden, z.B. zwischen dem Motor 551 und dem Getriebe 554, wie in Figur 3 gezeigt. Sie könnte auch in den Motor 551 integriert sein. Erfindungsgemäss greift die Bremse 552 an einer Stelle des Stranges hemmend an, die motorseitig des Getriebes 554 gelegen ist, da dort kleinere Bremskräfte ausreichen, um dem dortigen kleineren Drehmoment entgegen zu wirken. Der Antrieb 55 umfasst ferner einer elektrisch ansteuerbare Arretierungseinheit, welche mit 553 bezeichnet und so ausgelegt ist, dass sie in einem ersten Zustand die Drehbewegung des Antriebstranges komplett unterbinden und in einem zweiten Zustand die Drehbewegung komplett freigeben kann, wobei der erste Zustand eingenommen wird, wenn die Arretierungseinheit 553 ein elektrisches Signal empfängt, und der zweite Zustand eingenommen wird, wenn kein elektrisches Signal vorliegt. Bezüglich der Lage der Arretierungseinheit 553 gilt analog das bezüglich der Bremse 552 Gesagte. Es gibt viele mögliche Ausführungsformen, die für die Arretierungseinheit 553 geeignet sind. So kann es sich beispielsweise um eine ansteuerbare Bremse handeln, deren Bremskraft im geschlossen ersten Zustand so groß ist, dass die Gewichtskraft der Schütztafel 51 nicht ausreicht um die Haftreibung der Bremse zu überwinden. Es könnte sich beispielsweise um eine Klinkenkonstruktion handeln, die in ein entsprechendes Zahnrad (z.B. im Getriebe) eingreift, um die Drehbewegung des Antriebstranges komplett zu unterbinden. Oder es könnte eine Vorrichtung mit einem ein- und ausfahrbaren Pin sein, der in eine entsprechende Öffnung z.B. in der Antriebswelle des Stranges, wie in Figur 3 angedeutet, oder in einem Rad des Getriebes 554 eingreift. Die beschriebene Funktionsweise der Ansteuerung der Arretierungseinheit 553 kann dabei beispielsweise jeweils durch das Zusammenspiel von Elektromagneten, Permanentmagneten und/oder mechanischen Federn erreicht werden. Der Zweck der Arretierungseinheit 553 besteht darin, dass im geöffneten Zustand des Wasserschützes 5, der Antrieb 55 blockiert werden kann, so dass der Motor 551 ausgeschaltet werden kann. Da sich der Wasserschütz 5 die meiste Zeit in diesem Zustand befindet, kann so Energie gespart werden, da die Arretierungseinheit 553 im blockierten ersten Zustand nur wenig elektrische Energie verbraucht. Andererseits ist durch die beschriebene Schaltlogik sichergestellt, dass bei einem Stromausfall die Arretierungseinheit 553 den zweiten Zustand einnimmt und dadurch den Antriebsstrang freigibt, so dass sich der Wasserschütz 5 mit der über die Bremse 552 eingestellten Schließzeit schließen kann. Der Antrieb der vorliegenden Erfindung ermöglicht ein Arretieren der Schütztafel 51 in nahezu jeder beliebigen Position derselben. So kann z.B. der Wasserschütz 5 auch im Geschlossen-Zustand blockiert werden, was z.B. die Sicherheit bei Wartungsarbeiten erhöht.

Beim Öffnen des Wasserschützes 5 wird die Zeit für das Öffnen durch die Drehzahl des Motors 551 geregelt. In der Regel wird dabei der Motor 551 mit konstanter Drehzahl laufen. Falls die Bremse 552 permanent hemmend in den Antriebsstrang eingreift, arbeitet der Motor 551 dabei gegen die Bremskraft an. Optional kann der Energieverbrauch beim Öffnen reduziert werden, indem die Bremse 552 elektrisch gesteuert deaktiviert werden kann, d.h. in einem ersten Zustand greift die Bremse 552 mit der voreingestellten Bremskraft in den Antriebsstrang hemmend ein und in einem zweiten Zustand gibt die Bremse 552 den Antriebsstrang komplett frei.

Dabei ist die Bremse 552 so gestaltet, dass der zweite Zustand eingenommen wird, wenn ein elektrisches Steuersignal anliegt, und der erste Zustand eingenommen wird, wenn kein elektrisches Steuersignal anliegt. Dadurch wird gewährleistet, dass auch bei einem Stromausfall das Schließen des Wasserschützes 5 mit der eingestellten Schließzeit sicher erfolgen kann. Alternativ kann die Bremse 552 auch so ausgeführt sein, dass sie nur in einer Drehrichtung des Antriebsstrangs hemmend in diesen eingreift. D.h. nur wenn sich der Antriebsstrang in Schließen-Richtung dreht (wobei sich die Schütztafel 51 senkt) greift die Bremse 552 hemmend in den Antriebsstrang ein, und in der Öffnen-Richtung (wobei die Schütztafel 51 gehoben wird) kann sich der Antriebsstrang ungehindert drehen.

Das Schließen des Wasserschützes 5 kann auf zwei Arten bewerkstelligt werden. Einmal durch Stromlos-Schalten des Motors 551 bei aktiver Bremse 552, oder durch Einfahren des Spindelgewindetriebs mit Hilfe des Motors 551. In beiden Fällen muss natürlich die Arretierungseinheit 553 den Antriebsstrang freigeben. Im zweiten Fall wird die Schließzeit über die Drehzahl des Motors 551 geregelt und die Bremse 552 kann ggf. deaktiviert sein, um Energie zu sparen.

Aus dem Gesagten wird klar, dass die Bremse 552 immer dann deaktiviert werden kann, wenn der Motor 551 arbeitet, d.h. unter Strom steht. Daher ist es besonders zweckmäßig, wenn eine ggf. steuerbare Bremse 552 in den Motor 551 integriert wird, da die Steuerung der Bremse 552 über die Stromversorgung des Motors 551 erfolgen kann. So werden weniger Bauteile benötigt und der Aufbau des Antriebs weiter vereinfacht.

Für den Spindelgewindetrieb 555 können Kugelgewindetriebe oder Planetenrollengewindetriebe verwendet werden, da diese über keine Selbsthemmung verfügen.

Es ist noch zu erwähnen, dass die Anordnung der einzelnen Komponenten in Figur 3 nur beispielhaft zu verstehen ist. Z.B. kann durch die Verwendung von geeigneten Kegelzahnrädern oder dergleichen der Antriebsstrang umgelenkt werden und so die Länge des Antriebs 55 verkürzt ausgeführt werden kann. Es ist jedoch immer die folgende Reihenfolge im Antriebsstrang gegeben: Motor 551, Getriebe 554, Spindelgewindetrieb 555.

## Patentansprüche

1. Wasserkraftanlage, umfassend ein Oberwasserbecken (1), ein Unterwasserbecken (2), ein Wasserwegsystem (3), der das Oberwasserbecken (1) mit dem Unterwasserbecken (2) verbindet und mehrere Teilwasserwege (31, 32, 33, 34) umfasst, eine hydraulische Maschine (4), welche im Wasserwegsystem (3) angeordnet ist, und einen Wasserschütz (5), welcher in einem Teilwasserweg (31, 32, 33, 34) angeordnet ist, **dadurch gekennzeichnet, dass** der Wasserschütz (5) eine bewegbare Schütztafel (51) umfasst, welche so ausgeführt ist, dass sie sich zwischen einer ersten Position, bei der der Teilwasserweg (31, 32, 33, 34) geschlossen ist, und einer zweiten Position, bei der der Teilwasserweg (31, 32, 33, 34) geöffnet ist, bewegen kann, und ferner eine elektrisch ansteuerbare Arretierungseinheit (553) zum Arretieren der Schütztafel (51) und einen elektrischen Antrieb (55) umfasst, wobei der Wasserschütz (5) so ausgeführt ist, dass er durch die Gewichtskraft allein in die Geschlossen-Position gebracht werden kann, und wobei der Antrieb (55) so ausgeführt ist, dass er den Wasserschütz (5) in die Geöffnet- und Geschlossen-Position bringen kann, wobei der Antrieb (55) einen Antriebsstrang umfasst, welcher einen elektrischen Motor (551) und ein Getriebe (554) umfasst, wobei der Antriebsstrang ferner einen Spindelgewindetrieb (555) umfasst, wobei die Komponenten des Antriebsstranges in der genannten Reihenfolge so angeordnet sind, dass durch den Betrieb des Motors (551) die Spindel des Spindelgewindetriebs ein- und ausgefahren werden kann, um den Wasserschütz (5) in die Geöffnet- und Geschlossen-Position zu bringen, wobei die Arretierungseinheit (553) in den Antrieb (55) integriert und so ausgebildet ist, dass sie den Antriebsstrang blockieren kann, wenn ein elektrisches Steuersignal anliegt, und den Antriebsstrang frei geben kann, wenn kein elektrisches Steuersignal anliegt, und der Antrieb (55) ferner eine mechanische Bremse (552) mit einstellbarer Bremskraft umfasst, welche so ausgebildet ist, dass sie hemmend in den Antriebstrang eingreifen kann, um die Schließzeit des Wasserschützes 5 einzustellen, wobei die Bremse (552) an einer Stelle des Antriebstranges hemmend angreifen kann, die motorseitig des Getriebes (554) liegt.

2. Wasserkraftanlage nach Anspruch 1, wobei die Bremse (552) so angeordnet ist, dass sie an einer Stelle des Antriebsstrangs eingreifen kann, an der geringe Drehmomente wirken.

3. Wasserkraftanlage nach einen der Ansprüche 1 oder 2, wobei die Arretierungseinheit (553) so angeordnet ist, dass sie an einer Stelle des Antriebsstrangs eingreifen kann, an der geringe Drehmomente wirken.

4. Wasserkraftanlage nach einem der Ansprüche 1 bis 3, wobei die Bremse (552) elektrisch ansteuerbar ausgeführt ist, so dass die Bremse (552) in einem ersten Zustand mit der voreingestellten Bremskraft in den Antriebsstrang hemmend eingreifen kann, und in einem zweiten Zustand den Antriebsstrang komplett freigeben kann, wobei der zweite Zustand eingenommen werden kann, wenn ein elektrisches Steuersignal anliegt, und der erste Zustand eingenommen werden kann, wenn kein elektrisches Steuersignal anliegt.

5. Wasserkraftanlage nach einem der Ansprüche 1 bis 3, wobei die Bremse (552) so ausgeführt ist, dass sie nur in derjenigen Drehrichtung des Antriebsstrangs hemmend in diesen eingreifen kann, bei der der Wasserschütz (5) geschlossen wird, und sich in der anderen Drehrichtung der Antriebsstrang ungehindert durch die Bremse (552) drehen kann.

6. Wasserkraftanlage nach einem der Ansprüche 1 bis 5, wobei die Bremse (552) in den Motor (551) integriert ausgeführt ist.

7. Wasserkraftanlage nach einem der Ansprüche 1 bis 6, wobei der Spindelgewindetrieb (555) als Kugelgewindetrieb ausgeführt ist.

8. Wasserkraftanlage nach einem der Ansprüche 1 bis 6, wobei der Spindelgewindetrieb (555) als Planetenrollengewindetrieb ausgeführt ist.

## Claims

1. Hydroelectric power plant, comprising an upper water basin (1), a lower water basin (2), a water route system (3) which connects the upper water basin (1) to the lower water basin (2) and comprises a plurality of part water routes (31, 32, 33, 34), a hydraulic machine (4) which is arranged in the water route system (3), and a water sluice (5) which is arranged in one part water route (31, 32, 33, 34), **characterized in that** the water sluice (5) comprises a movable sluice gate (51) which is configured in such a way that it can move between a first position, in the case of which the part water route (31, 32, 33, 34) is closed, and a second position, in the case of which the part water route (31, 32, 33, 34) is open, and comprises, furthermore, an electrically actuable locking unit (553) for locking the sluice gate (51), and comprises an electric drive (55), the water sluice (5) being configured in such a way that it can be moved into the closed position solely by way of the weight, and the drive (55) being configured in such a way that it can move the water sluice (5) into the open and closed position, the drive (55) comprising a drive train which comprises an electric motor (551) and a transmission (554), the drive train comprising, furthermore, a spindle thread drive (555), the components of the drive train being arranged in the mentioned sequence in such a way that the spindle of the spindle thread drive can be retracted and extended by way of the operation of the motor (551), in order to move the water sluice (5) into the open and closed position, the locking unit (553) being integrated into the drive (55) and being configured in such a way that it can lock the drive train when an electric control signal is present, and can release the drive train when no electric control signal is present, and, furthermore, the drive (55) comprising a mechanical brake (552) with an adjustable brake force, which mechanical brake (552) is configured in such a way that it can engage into the drive train in a locking manner, in order to set the closing time of the water sluice (5), it being possible for the brake (552) to act in a locking manner at a point of the drive train, which point lies on the motor side of the transmission (554).

2. Hydroelectric power plant according to Claim 1, the brake (552) being arranged in such a way that it can act at a point of the drive train, at which point low torques act.

3. Hydroelectric power plant according to either of Claims 1 and 2, the locking unit (553) being arranged in such a way that it can act at a point of the drive train, at which point low torques act.

4. Hydroelectric power plant according to one of Claims 1 to 3, the brake (552) being of electrically actuable configuration, with the result that the brake (552) can engage in a locking manner into the drive train with the preset brake force in a first state, and can release the drive train completely in a second state, it being possible for the second state to be assumed when an electric control signal is present, and it being possible for the first state to be assumed when no electric control signal is present.

5. Hydroelectric power plant according to one of Claims 1 to 3, the brake (552) being configured in such a way that it can engage in a locking manner into the drive train only in that rotational direction of the latter, in which the water sluice (5) is closed, and the drive train can rotate in the other rotational direction in a manner which is unimpeded by way of the brake (552).

6. Hydroelectric power plant according to one of Claims 1 to 5, the brake (552) being configured such that it is integrated into the motor (551).

7. Hydroelectric power plant according to one of Claims 1 to 6, the spindle thread drive (555) being configured as a ball screw drive.

8. Hydroelectric power plant according to one of Claims 1 to 6, the spindle thread drive (555) being configured as a planetary roller screw drive.

## Revendications

1. Centrale hydroélectrique, comprenant un réservoir d'eau amont (1), un réservoir d'eau aval (2), un système de voies d'eau (3) qui relie le réservoir d'eau amont (1) au réservoir d'eau aval (2) et comprend plusieurs voies d'eau partielles (31, 32, 33, 34), une machine hydraulique (4) qui est disposée dans le système de voies d'eau (3), et une vanne d'eau (5) qui est disposée sur une voie d'eau partielle (31, 32, 33, 34),
**caractérisée en ce que** la vanne d'eau (5) comprend une plaque de vanne mobile (51) qui est réalisée de façon à pouvoir se déplacer entre une première position, dans laquelle la voie d'eau partielle (31, 32, 33, 34) est fermée, et une deuxième position, dans laquelle la voie d'eau partielle (31, 32, 33, 34) est ouverte, et comprend en outre une unité d'arrêt (553) à commande électrique pour arrêter la plaque de vanne (51) et un entraînement électrique (55), la vanne d'eau (5) étant réalisée de telle sorte qu'elle peut être amenée dans la position fermée uniquement par son poids, et dans laquelle l'entraînement (55) est réalisé de telle sorte qu'il peut amener la vanne d'eau (5) dans la position ouverte et fermée, l'entraînement (55) comprenant une chaîne cinématique qui comprend un moteur électrique (551) et une transmission (554), la chaîne cinématique comprenant en outre une vis d'entraînement (555), dans laquelle les composants de la chaîne cinématique sont disposés dans l'ordre mentionné de telle sorte que le fonctionnement du moteur (551) permet de rentrer et de sortir la vis de la vis d'entraînement afin d'amener la vanne d'eau (5) dans la position ouverte et fermée, dans laquelle l'unité d'arrêt (553) est intégrée dans l'entraînement (55) et réalisée de telle sorte qu'elle peut bloquer la chaîne cinématique si un signal de commande électrique est appliqué et peut libérer la chaîne cinématique si aucun signal de commande électrique n'est appliqué, et l'entraînement (55) comprend en outre un frein mécanique (552) à force de freinage réglable qui est réalisé de façon à pouvoir intervenir en blocage sur la chaîne cinématique afin de régler la durée de fermeture de la vanne d'eau (5), dans laquelle le frein (552) peut intervenir par blocage à un endroit de la chaîne cinématique qui se trouve côté moteur de la transmission (554).

2. Centrale hydroélectrique selon la revendication 1, dans laquelle le frein (552) est disposé de telle sorte qu'il peut intervenir à un endroit de la chaîne cinématique où agissent des couples faibles.

3. Centrale hydroélectrique selon l'une quelconque des revendications 1 ou 2, dans laquelle l'unité d'arrêt (553) est disposée de telle sorte qu'elle peut intervenir à un endroit de la chaîne cinématique où agissent des couples faibles.

4. Centrale hydroélectrique selon l'une quelconque des revendications 1 à 3, dans laquelle le frein (552) est réalisé à commande électrique, de sorte que dans un premier état, le frein (552) peut intervenir en blocage dans la chaîne cinématique avec la force de freinage préréglée, et dans un deuxième état, peut libérer complètement la chaîne cinématique, le deuxième étant pouvant être adopté si un signal de commande électrique est appliqué, et le premier état pouvant être adopté si aucun signal de commande électrique n'est appliqué.

5. Centrale hydroélectrique selon l'une quelconque des revendications 1 à 3, dans laquelle le frein (552) est réalisé de telle sorte qu'il ne peut intervenir en blocage sur la chaîne cinématique que dans le sens de rotation de celle-ci dans lequel la vanne d'eau (5) est fermée, et qu'il peut tourner dans l'autre sens de rotation de la chaîne cinématique sans être gêné par le frein (552).

6. Centrale hydroélectrique selon l'une quelconque des revendications 1 à 5, dans laquelle le frein (552) est réalisé en étant intégré dans le moteur (551).

7. Centrale hydroélectrique selon l'une quelconque des revendications 1 à 6, dans laquelle la vis d'entraînement (555) est réalisée sous la forme d'une vis d'entraînement à billes.

8. Centrale hydroélectrique selon l'une quelconque des revendications 1 à 6, dans laquelle la vis d'entraînement (555) est réalisée sous la forme d'une vis d'entraînement à rouleaux planétaires.
